# EUROPEAN PATENT APPLICATION

(11) **EP 0 995 616 A1**
(43) Date of publication of application: **26.04.2000**
(21) Application number: 98830634.6
(22) Date of filing: 22.10.1998
(51) Int. Cl.: B60B 29/00

(54) **Hand truck to replace the wheels of the heavy vehicles**

(71) Applicant: Bosco, Riccardo, 45020 Giacciano con Baruchella (Rovigo) (IT)
(72) Inventor: Bosco, Riccardo, 45020 Giacciano con Baruchella (Rovigo) (IT)
(74) Representative: Sassatelli, Franco T., Dr.

(57) **Abstract**

The hand truck with actuator for mounting a wheel consists of a square fixed part (1) and of a mobile part (8) having on a ledge an actuator. The frame fixed part (1) provides a pair of small wheels (3), a below plate (4) in front getting out, acting in combination with the wheels the standing of the apparatus in upright position, and upper a pair of handgrips (5). Said fixed part (1) brings on two pairs of joints (7) a square mobile part (8) with on the lower ends (9) a pair of parallel rollers (11) in front getting out acting as load device of the wheel. The mobile part (8), to be brought in raising by a back pedal (12), centrally supports connected on an intermediate ledge (18) a longitudinal actuator to be moved by a crank (19) having a fixed part (20) and a stem (21) centrally having an end shoop-shaped tool (22) with a cilindrical push border (23). For the mounting with the wheel (24) in upright position of the loading plane and with catching on the grips (5), the hand truck is brought in transport condition. The wheel is then lined up with the axle (25) of the vehicle by the pedal drive (12) and, making rotate the same wheel on the rollers (11), the constraint holes (26) of the rim (27) are compared with the dowel screws (28) of the same axle. Then with the crank drive (19) the same wheel is brought in putting forward by the push of the push border (23) on the border ot its central hole (29) till to determine the disposition of its rim (27) on the beating crown (30) of the axle in this way determining the complete introduction of the dowel screws (28) of the axle into the constraint holes (26) of the wheel.

The mounting is then completed with the blocking by nuts threaded on the screws (28).

## Description

The invented apparatus consists of a new hand truck particularly to be used for the emergencies on street to replace the wheels of the heavy vehicles which from a slanting disposition, used like a conveyor on small wheels of the wheel, is to be brought in vertical standing from which the wheel is transported in constraint position on the axle by mechanical way. This fact is permitted because the wheel, at the bottom supported on a couple of parallel sinmetrical rollers placed in front getting out in upright position from a longitudinal actuator to be moved by crank that on the back supports the same wheel by a shoop-shaped tool the border of which comes to centrally lean on the border of the rim hole. At the beginning the operator moving the apparatus lines up it with the axle, then it is compared the constraint holes of the wheel rim with the pins of the same axle manually rotating the wheel on the couple of supporting rollers and by a pedal drive of a parallelogram device, regulating in width the loading plant, the same wheel is brought in axis with the axle.Then with the crank drive the operator makes to put forward the wheel sliding on the couple of rollers till to determine, with the introduction of the axle end part into the shoop-shaped tool and of the dowel screws into the constraint holes, the coming of the rim in constraint position. In this way it is possible to complete the mounting by inserting stop nuts. The wheel of a heavy vehicle has a considerable weight and a difficult catching condition that come to request for the raising the action of two experts in good constitution which come to support on sides the wheel in synergy with two arms. In the current method to change a wheel, with the end part of the axle supported by a jack and initially unscrewed the stop nuts, the wheel is brought in raising so determining the removal of the dowel screws form the constraint holes of the rim and the wheel is unthreaded then bringing it in lowering in loading position on a hand truck on which it is transported in a desired place unloaded it by tipping the same truck. The new wheel is then loaded on the same truck to be moved in position for the mounting to be actuated raising the wheel and inserted it in constraint position so then inserting the stop nuts. An embodiment to be used by the tyre repairs and distributors consists in the use of trucks with raised loading flatcars to bring the wheel near the axle. But when said method, for example during an emergency on street, is not to be used because the replacing working must be made by a single operator comes to present itself a problem which only the expert can resolve and also having a high capacity of weight-lifting and which, however, brings a big tiring and risks for the body. Infact, being impossible to directly support the wheel weight, the operator in the current method makes use of a pair of metallic tubes or similar to be manually supported in slanting in down way on their upper ends that passing in sinmetrical conversion under the wheel come to support it on two points. Making fulcrum on the ground on the lower ends of said tubes and actuating thrusts upward, owing to the disposition in slanting conversion of the lever arms, it is determined by subsequnet phases of separation, by raising of the borders of the constraint holes of the rim from the dowel screws of the axle, and of overturn outside the unthreading of the wheel to be replaced than is then to be brought on the ground lowering gradually the lever arms. Whereas to bring in constraint position the new wheel it is actuated in opposite way having the attention to make the introduction of the dowel screws of the axle into the constraint holes of the rim working with the wheel slanting outward and working with great exactness. In comparison with said empiric method a new apparatus is described in the Italian Patent Application of the same Applicant filed on June 19, 1998 with application number BO98A 000379 "Apparatus for replacing the wheels of the heavy vehicles". Said apparatus realizes and advancement using a hand truck to be moved on a pair of small wheels in which the loading plane is to be raised by means of a support body with a double frame to be moved on joints and bringing in parallelogram opening by a pedal drive.

The wheel to be replaced is to be unthreaded by making in sequence slanting thrusts outward from the bottom upward so determining each time the separation of the borders of the rim holes from the axle dowel screws so permitting a getting out moving.

Said thrusts to be actuated bringing in oscillation the apparatus with an initial counterclockwise movement. Whereas the new wheel is to be mounted in constraint position bringing at the biginning in axis the constraint holes with the axle screws and then actuating the introduction making to oscillate the apparatus starting from a clockwise movement so to give in sequence a set of thrusts from the bottom upward oriented in going in. The apparatus described in the Italian Patent Application BO98A 000379 avoids the risks of accidents and the big tiring, caused by the loading instability of the wheel in the current method, but however it canes to request a big work and movement ability such us it comes to operate on an unstable loading flatcar whereas the position search of the wheel mist to be in relation with two combinated factors: the right elevation of the outside part of the frame, in comparison with the disposition of the inside part of the frame actuated by the operator with the pedal drive, and the right slant to do each time to the apparatus moved in oscillation by gripping with the hands on its grips. The apparatus of the present application comes to avoids said disadvantages so permitting a speed and safety movement in the position search of the wheel to be made by the normal operator. This fact by means of a new hand truck to be put in stopping so preliminarly permitting the stable upright of the wheel that, by means of an actuator to be driven by a pedal, then permits to bring in axis the wheel holes with the axle screws. From that position the wheel is to be brought in constraint position by an actuator driven by a crank using a push shoop-shaped tool the border of which comes to push, with beating effect, on the border of the central hole of the rim for the movement and maintenance position of the same wheel so realizing the mounting of the wheel only in mechanical way. The invented hand truck with actuator for mounting the wheel consists of a section square frame with fixed part 1 having at the bottom at the back brackets 2 for a pair of small wheels 3 and below a plate 4 in front getting out, acting in combination the standing of the apparatus in upright position, and upper a pair of handgrips 5. Said frame fixed part 1 brings, on two pairs of parallelogram joints with lever arms 6 on joints 7, a square mobile part 8, of identical conformation, with on the lower ends 9, projecting from pins 10, a couple of parallel rollers 11 in front getting out acting as load device of the wheel. The mobile part 8 to be brought in raising by a back pedal 12 with lever arm 13 moving on joint 14 on a bracket 15 connected to the fixed part 1 supporting on its front end the mobile part 8 by the bracket 16 on joint 17.

The mobile part 8 centrally supports, connected on an intermediate ledge 18, a longitudinal actuator to be moved by a crank 19 having a fixed part 20 and a stem 21 centrally having an end shoop-shaped tool 22 with a cilindrical push border 23.

For the mounting with the wheel 24 in upright position on the loading plane and with catching on the grips 5, the hand truck is brought in transport condition by counterclockwise rotation so bringing it to be supported only on its small wheels 3. The wheel is then lined up with the axle 25 of the vehicle by the pedal drive 12 and, making rotate the same wheel on the rollers 11, the constraint holes 26 of the rim 27 are compared with the dowel screws of the same axle. With the crank drive 19 the same wheel is brought in putting forward by the push of the push border 23 on the border of its central hole 29. Said wheel in advancement on the rollers 11 till to determine the disposition of its rim 27 on the beating crown 30 of the axle in this way determing the complete introduction of the dowel screws 28 of the axle into the constraint holes 26 of the wheel which disposition of the end part 31 of the axle 25 into the hollow 32 of the shoop-shaped tool 22. The mounting is then completed with the blocking by stop nuts threaded on the screws 28. The actuator to move forward the wheel is activated by the crank 19 moving on bearings 33 bevel gears 34 moving a screwed shaft 35 engaged into the duct 36 with internal thread of a square coaxial body 37 forming the stem with at its end the shoop-shaped tool 22. Said coaxial engaged in the movement of longitudinal translation such as it is contained in compared section with the body of fixed part 20 with the sens of movement related to that of rotation of the crank 19. For disassembling, unthreaded the stop nuts, with the hand truck in position of transport acting on the pedal 12, thrusts in sequence are given in slanting outward with the rollers 11 in contact with the wheel till to determine the unthreading of the same wheel with unloading permitted by the lowering of the rollers 11. In missing of sliding of the means of supporting of the wheel on the flatcar formed by the rollers 11 it is provided the disposition of the actuator in lower position with use of a flat tool to act as pusher of the wheel on its inferior part in a position related to the ritention effect determined in position. The invented apparatus and the mounting phases of the wheel are illustrated in schematic view in the drawings of sheets 1, 2, 3 and 4.

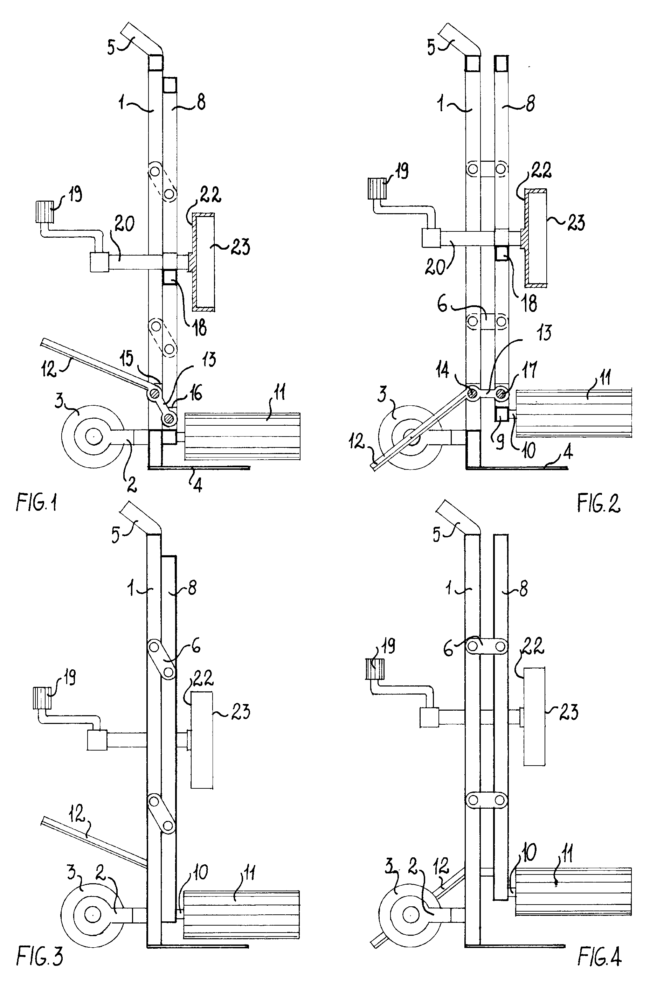

In sheet 1 fig. 1 is section view of the hand truck with the frame mobile part in closing. Fig. 2 is section view of the hand truck with the frame mobile part in raising. Fig. 3 is lateral view with the mobile part in closing. Fig. 4 is lateral view with the mobile part in raising. In sheet 2 fig. 5 is transversal section view A-A' of the truck to see the pedal drive. Fig. 6 is transversal section view B-B' of the truck to show from the top the actuator to move the wheel in loading.

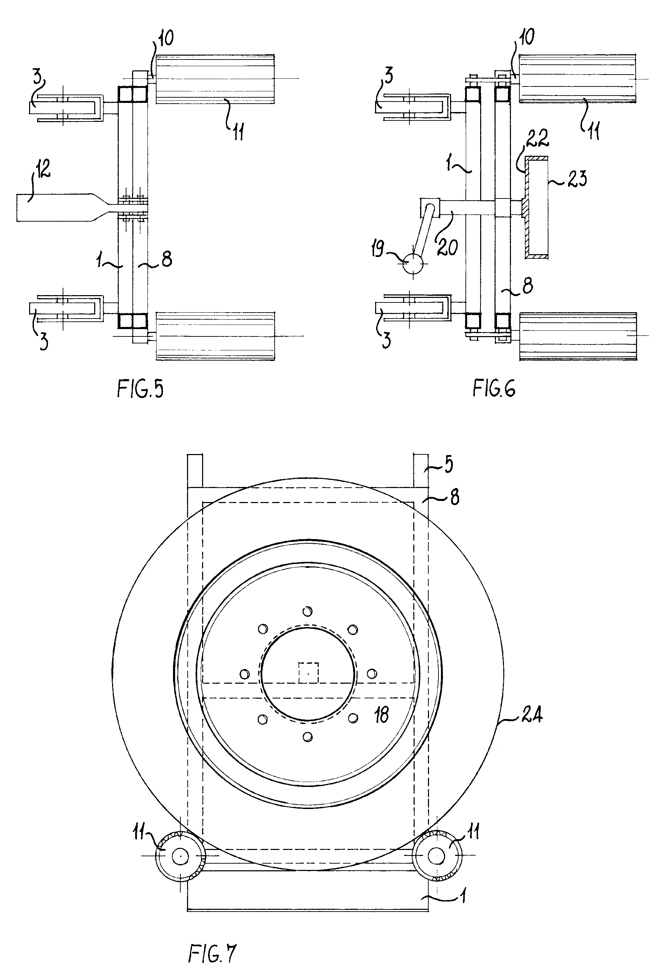

Fig. 7 is frontal anterior view of the truck bringing the wheel in standing position with the elevation device in closing.

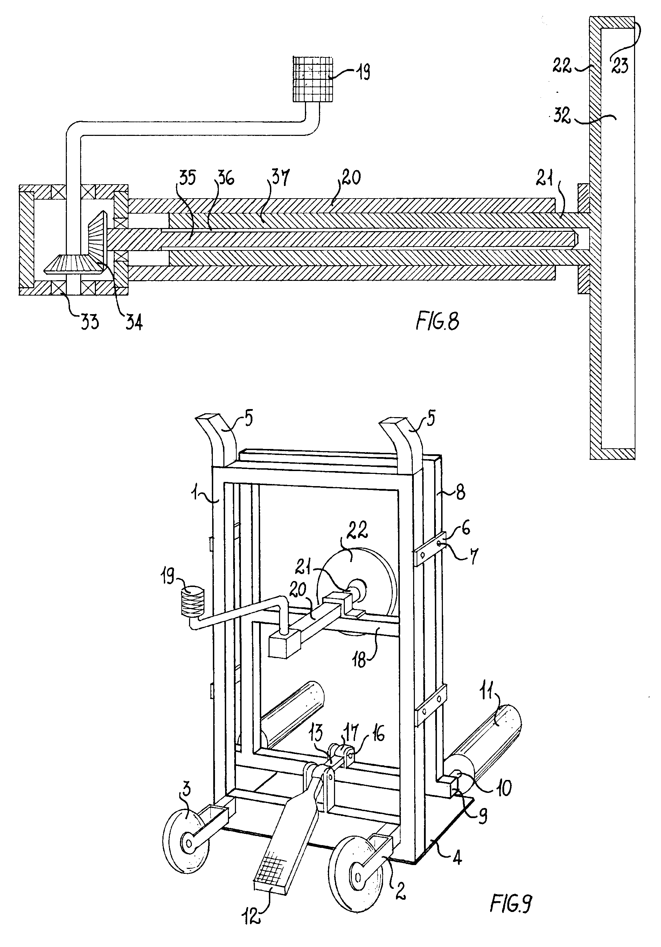

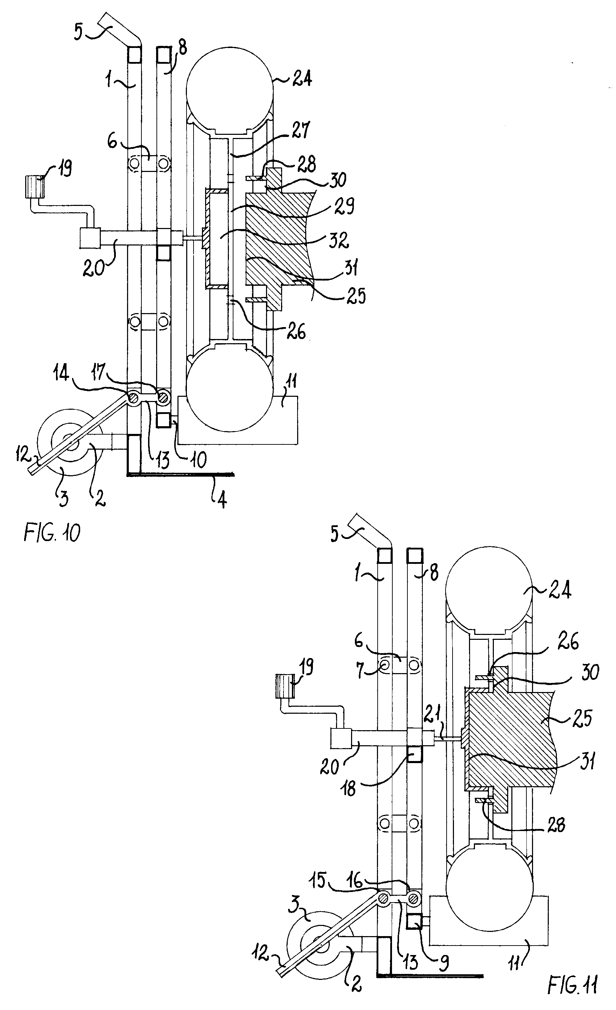

In sheet 3 fig. 8 is longitudinal section view of the actuator bringing the shoop-shaped tool in starting position. Fig. 9 is perspective view side at the back of the truck in standing position and with the elevation device in opening of the flatcar.

In sheet 4 fig. 10 is longitudinal section view of the truck with the wheel to be mounted in initial position. Fig. 11 is longitudinal section view of the truck with the wheel in constraint position for its connection on the axle.

## Claims

1. Hand truck to replace the wheels of the heavy vehicles providing a transport device with actuator for mounting a wheel consists of a square fixed part (1) and of a mobile part (8) having, on a ledge, an actuator; characterized in that:
- the square frame with fixed part (1), having at the bottom at the back brackets (2) for a pair of small wheels (3), below a plate (4) in front getting out acting in combination the standing of the apparatus in upright position and upper a pair of handgrips (5), brings on two pairs of joints (7) a square mobile part (8), of identical conformation, with on the lower ends (9) projecting from pins (10) a couple of parallel rollers (11) in front getting out acting as load device of the wheel;
- the mobile part (8) to be brought in raising by a back pedal (12) with lever arm (13) moving on joint (14) on a bracket (15) connected to the fixed part (1) supporting on its front end the mobile part (8) by a bracket (16) on joint (17), centrally supports connected on an intermediate ledge (18) a longitudinal actuator to be moved by a crank (19) having a fixed part (20) and a stem (21) centrally having an end shoop-shaped tool (22) with a cilindrical push border (23);
- for the mounting with the wheel (24) in upright position on the loading plane and with catching on the grips (5), the hand truck is brought in transport condition by counterclockwise rotation so bringing it to be supported only on its small wheels (3); the wheel is then lined up with the axle (25) of the vehicle by the pedal drive (12) and, making rotate the same wheel on the rollers (11), the constraint holes (26) of the rim (27) are compared with the dowel screws (28) of the same axle; with the crank drive (19) the same wheel is brought in putting forward by the push of the push border (23) on the border of its central hole (29), said wheel in advancement on the rollers (11) till to determine the disposition of its rim (27) on the beating crown (30) of the axle in this way determining the complete introduction of the dowel screws (28) of the axle into the constraint holes (26) of the wheel which disposition of the end part (31) of the axle (25) into the hollow (32) of the shoop-shaped tool (22); the mounting is then completed with the blocking by stop nuts threaded on the screws (28).

2. Hand truck to replace the wheels of the heavy vehicles, as per claim 1), characterized in that the actuator to move forward the wheel (24) is activated by the crank (19) moving on bearings (33) bevel gears (34) moving a screwed shaft (35) engaged into the duct (36) with internal thread of a square coaxial body (37) forming the stem with at its end the shoop-shaped tool (22); said coaxial body engaged in the movement of longitudinal translation such as it is contained in compared section with the body of the fixed part (20) with the sens of movement related to that of rotation of the crank (19).

3. Hand truck to replace the wheels of the heavy vehicles, as per claim 1), characterized in that in missing of sliding of the means of supporting of the wheel on the flatcar formed by the rollers (11) it is provided the disposition of the actuator in lower position with use of a flat tool to act as pusher of the wheel on its inferior part in a position related to the ritention effect determined in position.

4. Hand truck to replace the wheels of the heavy vehicles, as per claim 1), characterized in that for disassembling, unthreaded the stop nuts and with the hand truck in position of transport, acting on the pedal (12) thrusts in sequence are given in slanting outward with the rollers (11) in contact with the wheel till to determine the unthreading of the same wheel with unloading permitted by the lowering of the rollers (11).
